# EUROPÄISCHE PATENTSCHRIFT

(11) **EP 0 593 496 B1**
(45) Veröffentlichungstag und Bekanntmachung des Hinweises auf die Patenterteilung: **21.08.1996**
(21) Anmeldenummer: 92909755.8
(22) Anmeldetag: 20.05.1992
(51) Int. Cl.: B60B 5/02, B60B 23/10

(54) **FAHRZEUGRAD**
VEHICLE WHEEL
ROUE DE VEHICULE

(30) Priorität: 16.07.1991 DE 4123459
(43) Veröffentlichungstag der Anmeldung: 27.04.1994
(73) Patentinhaber: JABLONSKI, Karl-Heinz, D-64646 Heppenheim (DE)
(72) Erfinder: JABLONSKI, Karl-Heinz, D-64646 Heppenheim (DE)
(74) Vertreter: Naumann, Ulrich, Dr.-Ing.
(86) Internationale Anmeldenummer: DE9200411
(87) Internationale Veröffentlichungsnummer: WO9301946

(56) Entgegenhaltungen:
- EP-A- 0 522 672
- AU-B- 524 458
- DE-U- 9 014 530
- FR-A- 2 666 544
- US-A- 4 982 998
- PATENT ABSTRACTS OF JAPAN vol. 014, no. 157 (M-0955)27. März 1990 & JP,A,20 018 102 (HIROYUKI KANAI) 22 January 1990
- Weber, W., Szabo, L.: "Entwicklung eines Fahrzeugrads aus GFK"; ATZ 85 (1983) 10, Sn. 593-597

## Beschreibung

Die Erfindung betrifft ein Fahrzeugrad für Personenkraftfahrzeuge, bestehend aus einer zur Aufnahme eines Reifens dienenden Felge und einer die Felge mit der Radnabe verbindenden Radschüssel, wobei die Felge aus Kunststoff und die Radschüssel zumindest weitgehend aus Metall besteht und die Radschüssel an einem nach innen gerichteten Rand der Felge befestigt ist.

Aus der gattungsbildenden AU-B-524 458 ist ein Fahrzeugrad, bestehend aus einer zur Aufnahme eines Reifens dienenden Felge und einer die Felge mit der Radnabe verbindenden Radschüssel bekannt. Die Felge besteht aus faserverstärktem synthetischem Harz und die Radschüssel ist aus Metall, nämlich aus einer Magnesium- oder Aluminiumlegierung hergestellt. Felge und Radschüssel sind miteinander verschraubt.

Das aus der AU-B-524 458 bekannte Fahrzeugrad erweist sich jedoch in der Praxis, insbesondere beim Zusammenbau, als problematisch, was auf die durch Verschraubung herzustellende Verbindung zwischen Felge und Radschüssel zurückzuführen ist. Die insgesamt aus Metall bestehende Radschüssel weist nämlich einen Aufnahmebereich zur Aufnahme eines entsprechenden Aufnahmebereichs der Radschüssel auf, wobei der Aufnahmebereich der Felge exakt und nahezu ohne Spiel in den Aufnahmebereich der Radschüssel hineinpassen muß. Aufgrund einer dort kantigen Ausgestaltung ist bei geringstmöglichem Spiel zwischen den in Rede stehenden Bereichen der Zusammenbau besonders schwierig. Diese Schwierigkeit wird abermals dadurch ganz erheblich erhöht bzw. die Montage bei geringstmöglichem Spiel geradezu unmöglich gemacht, wenn der Zusammenbau bei erhöhten Raumtemperaturen zu erfolgen hat. Dann nämlich dehnt sich das Metall der Radschüssel aufgrund eines höheren thermischen Ausdehnungskoeffizienten wesentlich stärker aus als das Kunststoffmaterial der Felge. Folglich ist es bei dem bekannten Fahrzeugrad schwierig, die Felge mit ihrem Verbindungsbereich in den entsprechenden Verbindungs- bzw. Aufnahmebereich der Radschüssel einzusetzen. Insbesondere bei automatisiertem Zusammenbau sind die zuvor genannten Probleme bei dem bekannten Fahrzeugrad nahezu unüberwindbar, was letztendlich die Automatisierung der Fertigung bzw. Montage ausgeschlossen erscheinen läßt.

Aus der US-A-4 982 998 ist ebenfalls ein Fahrzeugrad bekannt, welches aus einer zur Aufnahme eines Reifen dienenden Felge und einer die Felge mit der Radnabe verbindenden Radschüssel besteht. Auch hier können Felge und Radschüssel aus zwei unterschiedlichen Materialien bestehen. Die Radschüssel ist mit ihrem Randbereich in etwa der zwischen Hump und Tiefbett auf der dem Reifen abgewandten Seite der Felge ausgebildeten Kontur angepaßt und liegt dort weitgehend formschlüssig an der Felge an.

Der Erfindung liegt daher die Aufgabe zugrunde, ein Fahrzeugrad der eingangs genannten Art so weiterzubilden, daß die Felge und Radschüssel leicht montierbar sind und daß im Übergangsbereich zwischen Felge und Radschüssel eine möglichst glatte, nahezu spaltfreie Oberfläche vorliegt.

Das erfindungsgemäße Fahrzeugrad löst die voranstehende Aufgabe durch die Merkmale des Patentanspruches 1. Danach ist das eingangs genannte Fahrzeugrad derart ausgestaltet, daß die Radschüssel mit ihrem Randbereich in etwa der zwischen Hump und Tiefbett auf der dem Reifen abgewandten Seite der Felge ausgebildeten Kontur angepaßt ist und dort weitgehend formschlüssig an der Felge anliegt, und daß die Radschüssel mittels sich von der Radinnenseite durch Bohrungen in den Rand hindurch erstreckenden und in die Radschüssel hineinreichenden Schrauben mit der Felge verbunden ist.

Erfindungsgemäß ist die zur Wärmeabfuhr weniger beitragende Felge des Fahrzeugrades insbesondere zur Gewichtsreduzierung des gesamten Fahrzeugrades aus Kunststoff gefertigt. Die für die Wärmeabfuhr der aus der Bremsenergie entstehenden Wärme verantwortliche und mit der Umgebung Wärme austauschende Radschüssel ist dagegen zumindest weitgehend aus Metall gefertigt. Somit erfüllt das Fahrzeugrad insgesamt einerseits die Forderung nach Gewichtsreduzierung, andererseits nach hinreichender Wärmeabfuhr im Bereich der Radschüssel.

Erfindungsgemäß ist die Felge außerdem mit der Radschüssel form- und kraftschlüssig verbunden. Dazu ist die Felge mit der Radschüssel verschraubt, und die Radschüssel ist mit ihrem Randbereich in etwa der zwischen Hump und Tiefbett auf der dem Reifen abgewandten Seite der Felge ausgebildeten Kontur angepaßt. Dort liegt dann die Radschüssel weitgehend formschlüssig an der Felge an. Erfindungsgemäß weist die Felge auf der dem Reifen abgewandten Seite des Tiefbetts einen nach innen gerichteten Rand zur Anlage und zum Festschrauben der Radschüssel auf. Die Radschüssel ist dann mittels sich von der Radinnenseite durch Bohrungen in dem Rand hindurchstreckenden und in die Radschüssel hineinreichenden Schrauben mit der Felge verbunden.

Da sich die Felge einerseits durch die Reibung zwischen Reifen und Straße, andererseits durch die von der Bremse her stark erwärmte Radschüssel ebenfalls erwärmt, ist es von besonderem Vorteil, wenn es sich bei dem die Felge bildenden Kunststoff um einen hochwarmfesten Kunststoff handelt. Dieser Kunststoff sollte zur Wärmeableitung eine relativ hohe Wärmeleitfähigkeit aufweisen.

Die für die Wärmeableitung der von der Bremse stammenden Wärme verantwortliche Radschüssel ist in besonders vorteilhafter Weise aus Aluminium, Magnesium oder einer Aluminium- oder Magnesiumlegierung hergestellt. Diese Materialien weisen geringe Dichten auf und haben dennoch relativ hohe Festigkeitswerte. Die Wärmeleitfähigkeit von Aluminium und Magnesium ist hinreichend genug, daß bei genügend großer Oberfläche die beim Bremsen entstehende Wärme mühelos mit der Umgebung getauscht werden kann. Zur weiteren Gewichtsreduzierung könnte die Radschüssel auch aus einem Metall-Kunsstoff-Verbundwerkstoff hergestellt sein. Der Kunststoffanteil verringert abermals das Gewicht des Fahrzeugrades erheblich. Damit nun eine hinreichende Wärmeabfuhr möglich ist, müßte es sich bei dem Metall- Kunststoff-Verbundwerkstoff um ein Einlagerungsgefüge handeln, wobei die Kunststoffkomponente den Dispergenten, d.h. die Einlagerungsphase, bildet. Die aus Metall bestehende Matrix wäre demnach für den Wärmetransport bzw. die Wärmeleitfähigkeit verantwortlich, der eingelagerte Kunststoff würde bei guter Haftung zwischen den Phasen im Sinne eines Füllstoffes mit geringer Dichte dienen.

In besonders vorteilhafter Weise sind der Kunststoff der Felge und das Metall sowie gegebenenfalls der als Dispergent dienende Kunststoff der Radschüssel hinsichtlich ihrer thermischen Ausdehnung in etwa aufeinander abgestimmt. Diese Abstimmung ist insbesondere aufgrund der auftretenden unterschiedlich hohen Temperaturen von Vorteil, da bei in etwa abgestimmten thermischen Ausdehnungskoeffizienten bei der Erwärmung bzw. beim Abkühlen entstehende Materialspannungen weitgehend vermieden werden. Folglich ist auch eine Haftung zwischen den Komponenten bzw. Phasen weitgehend gewährleistet.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in einer geschnittenen Darstellung ein Ausführungsbeispiel eines erfindungsgemäßen Fahrzeugrades und
- Fig. 2: in einer Vorderansicht das Fahrzeugrad aus Fig. 1.

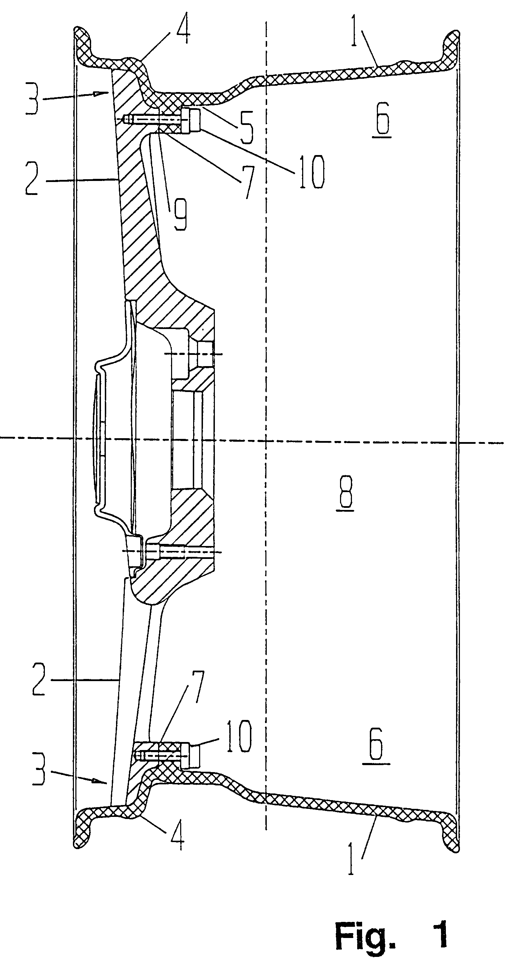

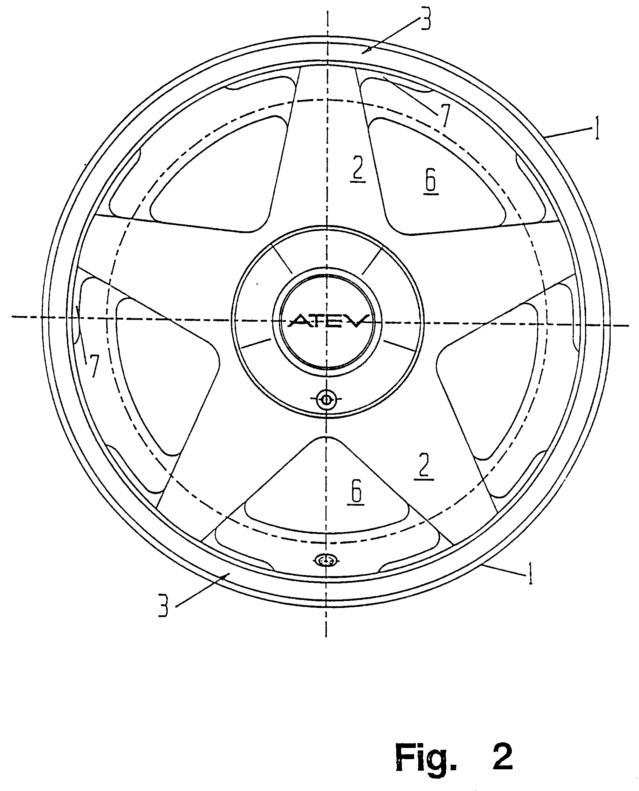

Die Fig. 1 und 2 zeigen gemeinsam ein für Personenkraftfahrzeuge bestimmtes Fahrzeugrad. Dieses Fahrzeugrad besteht aus einer zur Aufnahme eines in den Figuren nicht gezeigten Reifens dienenden Felge 1 und einer die Felge mit der in den Figuren ebenfalls nicht gezeigten Radnabe des Kraftfahrzeugs verbindenden Radschüssel 2. Fig. 1 zeigt besonders deutlich die Anordnung der Felge 1 und der Radschüssel 2. Auf Einzelheiten dieser Bauteile wird nachfolgend lediglich insoweit Bezug genommen, als diese Einzelheiten zu Beschreibung der erfindungsgemäßen Lehre von Bedeutung sind.

Erfindungsgemäß ist die Felge 1 aus Kunststoff und die Radschüssel 2 zumindest weitgehend aus Metall hergestellt. Fig. 1 zeigt dabei deutlich, daß die Felge 1 mit der Radschüssel 2 zumindest weitgehend formschlüssig verbunden ist. Bei dem Kunststoff der Felge 1 handelt es sich um einen hochwarmfesten Kunststoff. Die Radschüssel 2 ist aus Aluminium oder Magnesium bzw. aus einer entsprechenden Legierung hergestellt. Ebenso ist - wie bereits zuvor erwähnt - die Herstellung der Radschüssel 2 aus einem Metall-Kunststoff-Verbundwerkstoff denkbar.

Fig. 1 zeigt besonders deutlich, daß die Felge 1 mit der Radschüssel 2 verschraubt ist. Dazu ist die Radschüssel 2 mit ihrem Randbereich 3 zwischen Hump 4 und Tiefbett 5 auf der dem Reifen abgewandten Seite 6 der Felge 1 ausgebildeten Kontur angepaßt. Dort liegt die Radschüssel 2 formschlüssig an der Felge 1 an. Fig. 1 zeigt des weiteren, daß die Felge 1 auf der dem Reifen abgewandten Seite 6 des Tiefbetts 5 einen nach innen gerichteten Rand 7 zur Anlage und zum Festschrauben der Radschüssel 2 aufweist. Die Radschüssel 2 ist mittels sich von der Radinnenseite 8 durch Bohrungen 9 in dem Rand 7 hindurch erstreckenden und in die Radschüssel 2 hineinreichenden Schrauben 10 mit der Felge 1 verbunden.

## Patentansprüche

1. Fahrzeugrad, insbesondere für Personenkraftfahrzeuge, bestehend aus einer zur Aufnahme eines Reifens dienenden Felge (1) und einer die Felge (1) mit der Radnabe verbindenden Radschüssel (2), wobei die Felge (1) aus Kunststoff und die Radschüssel (2) zumindest weitgehend aus Metall besteht und die Radschüssel (2) an einem nach innen gerichteten Rand (7) der Felge (1) befestigt ist,
**dadurch gekennzeichnet**, daß die Radschüssel (2) mit ihrem Randbereich (3) in etwa der zwischen Hump (4) und Tiefbett (5) auf der dem Reifen abgewandten Seite (6) der Felge (1) ausgebildeten Kontur angepaßt ist und dort weitgehend formschlüssig an der Felge (1) anliegt, und daß die Radschüssel (2) mittels sich von der Radinnenseite (8) durch Bohrungen (9) in den Rand (7) hindurch erstreckenden und in die Radschüssel (2) hineinreichenden Schrauben (10) mit der Felge (1) verbunden ist.

2. Fahrzeugrad nach Anspruch 1, dadurch gekennzeichnet, daß die Felge (1) aus hochwarmfestem Kunststoff hergestellt ist.

3. Fahrzeugrad nach Anspruch 1 oder 2, dadurch gekennzeichnet, daß die Radschüssel (2) aus Aluminium, Magnesium oder einer Aluminium- oder Magnesiumlegierung hergestellt ist.

4. Fahrzeugrad nach Anspruch 1 oder 2, dadurch gekennzeichnet, daß die Radschüssel (2) aus einem Metall-Kunststoff-Verbundwerkstoff hergestellt ist.

5. Fahrzeugrad nach Anspruch 4, dadurch gekennzeichnet, daß die aus dem Metall-Kunststoff-Verbundwerkstoff hergestellte Radschüssel (2) ein Einlagerungsgefüge aufweist und daß die Kunststoffkomponente den Dispergenten bildet.

6. Fahrzeugrad nach einem der Ansprüche 1 bis 5, dadurch gekennzeichnet, daß der Kunststoff der Felge (1) und das Metall sowie ggf. der als Dispergent dienende Kunststoff der Radschüssel (2) hinsichtlich ihrer thermischen Ausdehnung in etwa aufeinander abgestimmt sind.

## Claims

1. Wheel, particularly for passenger cars, comprising a rim (1) to hold a tyre and a wheel disc (2) connecting said rim (1) to a hub, the rim (1) being largely made of plastic and the wheel disc (2) at least largely of metal, and wheel disc (2) is attached to an inwardly facing edge (7) of rim (1),
**characterised in that** the edge (3) of the wheel disc (2), on the side (6) facing away from the tyre, approximately matches the contour formed between hump (4) and drop base (5) and urges in a largely formfitting manner against rim (1), and in that wheel disc (2) is connected to rim (1) via screws (10) which extend from the inner side (8) of the wheel through bores (9) in edge (7) and into wheel disc (2).

2. Wheel according to claim 1, characterised in that rim (1) is made of a high temperature plastic.

3. Wheel according to claim 1 or 2, characterised in that wheel disc (2) is made of aluminium, magnesium or an aluminium or magnesium alloy.

4. Wheel according to claim 1 or 2, characterised in that wheel disc (2) is made of a metal-plastic composite material.

5. Wheel according to claim 4, characterised in that wheel disc (2), which is made of a metal-plastic composite material, has a matrix structure and in that the plastic material is the incorporated agent.

6. Wheel according to one of the claims 1 to 5, characterised in that the plastic of rim (1) and the metal and, optionally, the plastic of wheel disc (2) which serves as a filling agent are adjusted to one another with respect to their thermal expansion.

## Revendications

1. Roue de véhicule, notamment pour voitures de tourisme, composée d'une jante (1) et d'un flasque de roue (2) qui relie la jante (1) au moyeu de la roue, la jante (1) étant en matière plastique et le flasque de roue (2) étant en majeure partie en métal, le flasque de roue (2) étant fixé à un rebord (7) dirigé vers l'intérieur de la jante (1),
caractérisée en ce que le contour de la portion marginale (3) du flasque de roue (2) est adapté sensiblement au contour de la zone comprise entre le bourrelet (4) et la base creuse (5) de la face (6) de la jante non orientée vers le pneu et s'applique largement avec similarité de forme sur la jante (1), et en ce que le flasque de roue (2) est relié à la jante (1) au moyen de boulons (10) issus depuis la face intérieure (8) de la roue, passant au travers des forures (9) dans le rebord (7) pour aboutir à l'intérieur du flasque de roue (2).

2. Roue de véhicule suivant la revendication 1, caractérisée en ce que la jante (1) est fabriquée en une matière plastique résistant aux températures élevées.

3. Roue de véhicule suivant la revendication 1 ou la revendication 2, caractérisée en ce que le flasque de roue (2) est fabriqué en aluminium, en magnésium ou en un alliage d'aluminium ou de magnésium.

4. Roue de véhicule suivant la revendication 1 ou la revendication 2, caractérisée en ce que le flasque de roue (2) est fabriqué en un matériau composite de métal et de matière plastique.

5. Roue de véhicule suivant la revendication 4, caractérisée en ce que le flasque de roue (2) fabriqué en un matériau composite de métal et de matière plastique présente une structure d'insertion et en ce que la composante matière plastique constitue l'agent de dispersion.

6. Roue de véhicule suivant l'une quelconque des revendications de 1 à 5, caractérisée en ce que la matière plastique de la jante (1) et le métal ainsi que le cas échéant la matière plastique servant d'agent de dispersion du flasque de roue (2) présentent des coefficients de dilatation thermique sensiblement compatibles.
